# EUROPEAN PATENT APPLICATION

(11) **EP 4 848 201 A1**
(43) Date of publication of application: **02.12.2026**
(21) Application number: 25859723.6
(22) Date of filing: 26.08.2025
(51) Int. Cl.: G06T 7/00, G06N 3/0464

(54) **PIPELINE DEFECT DETECTION METHOD AND APPARATUS BASED ON POLYMORPHIC RECTANGULAR FEATURE EXTRACTION NETWORK, AND ELECTRONIC DEVICE**

(30) Priority: 02.09.2024 CN 202411215631
(71) Applicant: China Oil & Gas Pipeline Network Corporation, Beijing 100013 (CN); Pipechina Institute of Science and Technology, Tianjin 300450 (CN)
(72) Inventor: CHEN, Pengchao, Tianjin 300450 (CN); WANG, Yanan, Tianjin 300450 (CN); LI, Rui, Tianjin 300450 (CN); FU, Kuan, Tianjin 300450 (CN); DUAN, Jinyao, Tianjin 300450 (CN); HUANG, Jie, Tianjin 300450 (CN); QIU, Honghui, Tianjin 300450 (CN)
(74) Representative: HGF
(86) International application number: PCT/CN2025/116970
(87) International publication number: WO 2026/046173

(57) **Abstract**

Provided are a pipeline defect detection method and apparatus based on a polymorphic rectangular feature extraction network, and an electronic device, which relates to the technical field of oil and gas pipeline detection. According to the method provided in the present application, horizontal polymorphic rectangular pooling processing, vertical polymorphic rectangular pooling processing, and elongated convolution processing are performed on sample images to obtain multiple feature maps with enhanced long-range dependency between pixels corresponding to the sample images. Each feature map of the multiple feature maps contains long-distance information and short-distance information. In this way, the neural network model trained based on the multiple feature maps of each sample image can accurately detect square-shaped defects and elongated narrow defects inside pipelines.

## Description

The present application claims priority to Chinese Patent Application No. 202411215631.5, filed with the China National Intellectual Property Administration (CNIPA) on Sept. 2, 2024, the disclosure of which is incorporated herein by reference in its entirety.

### TECHNICAL FIELD

The present application relates to the technical field of oil and gas pipeline detection, for example, a pipeline defect detection method and apparatus based on a polymorphic rectangular feature extraction network, and an electronic device.

### BACKGROUND

An oil and gas pipeline can transport large volumes of oil and gas resources efficiently and safely to ensure normal supply of such resources. However, with the continuous expansion of the oil and gas pipeline network, the pipeline safety problem has become increasingly prominent. When an oil and gas pipeline safety accident occurs, it often results in human casualties and property damage. Therefore, to improve the reliability and safety of pipeline operation, pre-commissioning detection is generally performed on the oil and gas pipeline before commissioning to identify defects existing in the oil and gas pipeline.

In the related art, before commissioning, pipeline detection is typically performed via a manipulator arm for identifying pipeline deformation defects, but it fails to detect crack defects inside the pipeline. To achieve effective detection of the crack defects, a detector equipped with high-definition cameras is usually deployed to capture images of the interior of the pipeline. Machine learning algorithms are then adopted to analyze and process the captured internal pipeline images by means of square convolution or pooling operations, thereby evaluating internal pipeline conditions. However, such detection methods suffer from low detection accuracy; they cannot accurately identify the crack defects in near-rectangular regions inside the pipeline and thus fail to satisfy the users' usage requirements.

### SUMMARY

Embodiments of the present application provide a pipeline defect detection method based on a polymorphic rectangular feature extraction network. The method can rapidly and accurately detect crack defects inside a pipeline, thereby improving detection accuracy, effectively shortening detection time, and improving detection efficiency.

Embodiments of the present application adopt the following technical solutions.

In a first aspect, the present application provides a pipeline defect detection method based on a polymorphic rectangular feature extraction network. The method includes the steps below.

A training sample set is acquired, where the training sample set includes multiple sample images and a defect detection result corresponding to each sample image of the multiple sample images, and the multiple sample images are acquired by an image sensor inside a pipeline.

The multiple sample images are input into a feature pyramid network, and a feature map C1 of each sample image, a feature map C2 of each sample image, and a feature map C3 of each sample image are output, where the feature map C1 of each sample image, the feature map C2 of each sample image, and the feature map C3 of each sample image have different image sizes.

Horizontal polymorphic rectangular pooling processing and vertical polymorphic rectangular pooling processing are performed on the feature map C1 of each sample image, the feature map C2 of each sample image and the feature map C3 of each sample image to obtain a feature map C11 corresponding to the feature map C1 of each sample image, a feature map C21 corresponding to the feature map C2 of each sample image, and a feature map C31 corresponding to the feature map C3 of each sample image; where the feature map C11 of each sample image, the feature map C21 of each sample image, and the feature map C31 of each sample image are each a feature map including long-distance context information.

Elongated convolution processing is performed on the feature map C1 of each sample image, the feature map C2 of each sample image and the feature map C3 of each sample image to obtain a feature map C12 corresponding to the feature map C1 of each sample image, a feature map C22 corresponding to the feature map C2 of each sample image, and a feature map C32 corresponding to the feature map C3 of each sample image; where the feature map C12 of each sample image, the feature map C22 of each sample image, and the feature map C32 of each sample image are each a feature map with enhanced long-range spatial dependency.

Superposition processing is performed on the feature map C11 of each sample image and the feature map C12 of each sample image to obtain a feature map P1 of each sample image; superposition processing is performed on the feature map C21 of each sample image and the feature map C22 of each sample image to obtain a feature map P2 of each sample image; and superposition processing is performed on the feature map C31 of each sample image and the feature map C32 of each sample image to obtain a feature map P3.

Convolution processing is performed on the feature map P3 of each sample image so that the number of channels of the feature map P3 of each sample image is a first preset value, to obtain a feature map Q3 of each sample image.

Upsampling processing is performed on the feature map P3 of each sample image, and superposition processing is performed on an upsampled feature map P3 and the feature map P2 of each sample image to obtain a first feature map of each sample image.

Convolution processing is performed on the first feature map of each sample image so that the number of channels of the first feature map of each sample image is the first preset value, to obtain a feature map Q2 of each sample image.

Upsampling processing is performed on the feature map P2 of each sample image, and superposition processing is performed on an upsampled feature map P2 and the feature map P1 of each sample image to obtain a second feature map of each sample image.

Convolution processing is performed on the second feature map of each sample image so that the number of channels of the second feature map of each sample image is the first preset value, to obtain a feature map Q1 of each sample image.

Convolution processing is performed on the feature map Q3 of each sample image to obtain a feature map Q4 of each sample image.

Convolution processing is performed on the feature map Q4 of each sample image to obtain a feature map Q5 of each sample image.

A neural network model is trained according to the feature map Q1 of each sample image, the feature map Q2 of each sample image, the feature map Q3 of each sample image, the feature map Q4 of each sample image, the feature map Q5 of each sample image, and the defect detection result corresponding to each sample image to obtain a trained neural network model.

An internal pipeline image of a to-be-detected pipeline is input into the trained neural network model, and a defect detection result corresponding to the to-be-detected pipeline is output, where the defect detection result includes a normal detection result and an abnormal detection result.

In one possible implementation of the first aspect, that the horizontal polymorphic rectangular pooling processing and the vertical polymorphic rectangular pooling processing are performed on the feature map C1 of each sample image, the feature map C2 of each sample image, and the feature map C3 of each sample image to obtain the feature map C11 corresponding to the feature map C1 of each sample image, the feature map C21 corresponding to the feature map C2 of each sample image, and the feature map C31 corresponding to the feature map C3 of each sample image includes: the horizontal polymorphic rectangular pooling processing is performed on the feature map C1 of each sample image, the feature map C2 of each sample image, and the feature map C3 of each sample image to obtain a feature map I11 corresponding to the feature map C1 of each sample image, a feature map I21 corresponding to the feature map C2 of each sample image, and a feature map I31 corresponding to the feature map C3 of each sample image, where the feature map I11, the feature map I21, and the feature map I31 are each a feature map including horizontal pixel correlation information; the vertical polymorphic rectangular pooling processing is performed on the feature map C1 of each sample image, the feature map C2 of each sample image, and the feature map C3 of each sample image to obtain a feature map I12 corresponding to the feature map C1 of each sample image, a feature map I22 corresponding to the feature map C2 of each sample image, and a feature map I32 corresponding to the feature map C3 of each sample image, where the feature map I12, the feature map I22, and the feature map I32 are each a feature map including vertical pixel correlation information; and channel stacking and channel weighting processing is performed on the feature map I11 of each sample image and the feature map I12 of each sample image to obtain the feature map C11 corresponding to the feature map C1 of each sample image; the channel stacking and channel weighting processing is performed on the feature map I21 of each sample image and the feature map I22 of each sample image to obtain the feature map C21 corresponding to the feature map C2 of each sample image; and the channel stacking and channel weighting processing is performed on the feature map I31 of each sample image and the feature map I32 of each sample image to obtain the feature map C31 corresponding to the feature map C3 of each sample image.

In one possible implementation of the first aspect, that the horizontal polymorphic rectangular pooling processing is performed on the feature map C1 of each sample image, the feature map C2 of each sample image, and the feature map C3 of each sample image, to obtain the feature map I11 corresponding to the feature map C1 of each sample image, the feature map I21 corresponding to the feature map C2 of each sample image, and the feature map I31 corresponding to the feature map C3 of each sample image includes: pooling processing is performed on the feature map C1 of each sample image, the feature map C2 of each sample image, and the feature map C3 of each sample image by using multiple horizontal pooling kernels with different sizes, to obtain multiple sub-feature maps corresponding to the feature map C1 of each sample image, multiple sub-feature maps corresponding to the feature map C2 of each sample image, and multiple sub-feature maps corresponding to the feature map C3 of each sample image; the multiple sub-feature maps corresponding to the feature map C1 of each sample image is expanded to obtain multiple sub-feature maps having a same image size as the feature map C1, and channel stacking and channel restoration processing is performed on the multiple sub-feature maps of each sample image having the same image size as the feature map C1 to obtain the feature map I11 corresponding to the feature map C1 of each sample image; the multiple sub-feature maps corresponding to the feature map C2 of each sample image is expanded to obtain multiple sub-feature maps having a same image size as the feature map C2, and the channel stacking and channel restoration processing is performed on the multiple sub-feature maps of each sample image having the same image size as the feature map C2 to obtain the feature map I21 corresponding to the feature map C2 of each sample image; the multiple sub-feature maps corresponding to the feature map C3 of each sample image are expanded to obtain multiple sub-feature maps having a same image size as the feature map C3, and the channel stacking and channel restoration processing is performed on the multiple sub-feature maps of each sample image having the same image size as the feature map C3 to obtain the feature map I31 corresponding to the feature map C3 of each sample image.

In one possible implementation of the first aspect, the vertical polymorphic rectangular pooling processing is performed on the feature map C1 of each sample image, the feature map C2 of each sample image, and the feature map C3 of each sample image to obtain the feature map I12 corresponding to the feature map C1 of each sample image, the feature map I22 corresponding to the feature map C2 of each sample image, and the feature map I32 corresponding to the feature map C3 of each sample image includes: pooling processing is performed on the feature map C1 of each sample image, the feature map C2 of each sample image, and the feature map C3 of each sample image by using multiple vertical pooling kernels with different sizes, to obtain multiple sub-feature maps corresponding to the feature map C1 of each sample image, multiple sub-feature maps corresponding to the feature map C2 of each sample image, and multiple sub-feature maps corresponding to the feature map C3 of each sample image; the multiple sub-feature maps corresponding to the feature map C1 of each sample image are expanded to obtain multiple sub-feature maps having a same image size as the feature map C1, and the channel stacking and channel restoration processing is performed on the multiple sub-feature maps of each sample image having the same image size as the feature map C1 to obtain the feature map I12 corresponding to the feature map C1 of each sample image; the multiple sub-feature maps corresponding to the feature map C2 of each sample image are expanded to obtain multiple sub-feature maps having a same image size as the feature map C2, and the channel stacking and channel restoration processing is performed on the multiple sub-feature maps of each sample image having the same image size as the feature map C2 to obtain the feature map I22 corresponding to the feature map C2 of each sample image; and the multiple sub-feature maps corresponding to the feature map C3 of each sample image are expanded to obtain multiple sub-feature maps having a same image size as the feature map C3, and the channel stacking and channel restoration processing is performed on the multiple sub-feature maps of each sample image having the same image size as the feature map C3 to obtain the feature map I32 corresponding to the feature map C3 of each sample image.

In one possible implementation of the first aspect, that the elongated convolution processing is performed on the feature map C1 of each sample image, the feature map C2 of each sample image and the feature map C3 of each sample image to obtain the feature map C12 corresponding to the feature map C1 of each sample image, the feature map C22 corresponding to the feature map C2 of each sample image, and the feature map C32 corresponding to the feature map C3 of each sample image includes: convolution processing is performed on the feature map C1 of each sample image, the feature map C2 of each sample image, and the feature map C3 of each sample image by using multiple rectangular convolution kernels of different sizes, to obtain the multiple sub-feature maps corresponding to the feature map C1 of each sample image, the multiple sub-feature maps corresponding to the feature map C2 of each sample image, and the multiple sub-feature maps corresponding to the feature map C3 of each sample image; and the channel stacking and channel restoration processing is performed on the multiple sub-feature maps corresponding to the feature map C1 of each sample image to obtain the feature map C12 corresponding to the feature map C1 of each sample image; the channel stacking and channel restoration processing is performed on the multiple sub-feature maps corresponding to the feature map C2 of each sample image to obtain the feature map C22 corresponding to the feature map C2 of each sample image; and the channel stacking and channel restoration processing is performed on the multiple sub-feature maps corresponding to the feature map C3 of each sample image to obtain the feature map C32 corresponding to the feature map C3 of each sample image.

In one possible implementation of the first aspect, that the neural network model is trained according to the feature map Q1 of each sample image, the feature map Q2 of each sample image, the feature map Q3 of each sample image, the feature map Q4 of each sample image, the feature map Q5 of each sample image, and the defect detection result corresponding to each sample image to obtain the trained neural network model includes: model training parameters are received, where the model training parameters include the number of sample images, the number of training epochs, and a learning rate; and the neural network model is trained based on the model training parameters by using a target loss function and according to the feature map Q1 of each sample image, the feature map Q2 of each sample image, the feature map Q3 of each sample image, the feature map Q4 of each sample image, the feature map Q5 of each sample image, and the defect detection result, to obtain the trained neural network model.

In one possible implementation of the first aspect, before the training sample set is acquired, the method further includes: the multiple sample images and the defect detection result corresponding to each sample image are acquired; preprocessing is performed on the multiple sample images to obtain multiple preprocessed sample images, where an image size of each preprocessed sample image of the multiple preprocessed sample images is a target image size; and the training sample set is generated according to the multiple preprocessed sample images and the defect detection result corresponding to each sample image.

In one possible implementation of the first aspect, where before the preprocessing is performed on the multiple sample images, the method further includes: in a case where the number of the multiple sample images is less than a preset sample quantity, image augmentation processing is performed on the multiple sample images to enable the number of the multiple sample images to be greater than or equal to the preset sample quantity.

In a second aspect, the present application provides a pipeline defect detection apparatus based on a polymorphic rectangular feature extraction network. The apparatus includes an acquisition unit, a processing unit, a training unit, and a detection unit.

The acquisition unit is configured to acquire a training sample set, where the training sample set includes multiple sample images and a defect detection result corresponding to each sample image, and the multiple sample images are acquired by an image sensor inside a pipeline.

The processing unit is configured to input the multiple sample images into a feature pyramid network and output a feature map C1 of each sample image, a feature map C2 of each sample image, and a feature map C3 of each sample image, where the feature map C1 of each sample image, the feature map C2 of each sample image, and the feature map C3 of each sample image have different image sizes.

The processing unit is further configured to: perform, on the feature map C1 of each sample image, the feature map C2 of each sample image and the feature map C3 of each sample image, horizontal polymorphic rectangular pooling processing and vertical polymorphic rectangular pooling processing to obtain a feature map C11 corresponding to the feature map C1 of each sample image, a feature map C21 corresponding to the feature map C2 of each sample image, and a feature map C31 corresponding to the feature map C3 of each sample image; where the feature map C11 of each sample image, the feature map C21 of each sample image, and the feature map C31 of each sample image are each a feature map including long-distance context information.

The processing unit is further configured to: perform, on the feature map C1 of each sample image, the feature map C2 of each sample image, and the feature map C3 of each sample image, elongated convolution processing to obtain a feature map C12 corresponding to the feature map C1 of each sample image, a feature map C22 corresponding to the feature map C2 of each sample image, and a feature map C32 corresponding to the feature map C3 of each sample image; where the feature map C12 of each sample image, the feature map C22 of each sample image, and the feature map C32 of each sample image are each a feature map with enhanced long-range spatial dependency.

The processing unit is further configured to: perform, on the feature map C11 of each sample image and the feature map C12 of each sample image, superposition processing to obtain a feature map P1 of each sample image; perform, on the feature map C21 of each sample image and the feature map C22 of each sample image, superposition processing to obtain a feature map P2 of each sample image; and perform, on the feature map C31 of each sample image and the feature map C32 of each sample image, superposition processing to obtain a feature map P3.

The processing unit is further configured to: perform, on the feature map P3 of each sample image, convolution processing so that the number of channels of the feature map P3 of each sample image is a first preset value, to obtain a feature map Q3 of each sample image.

The processing unit is further configured to: perform, on the feature map P3 of each sample image, upsampling processing and perform, on an upsampled feature map P3 and the feature map P2 of each sample image, superposition processing to obtain a first feature map of each sample image.

The processing unit is further configured to: perform, on the first feature map of each sample image, convolution processing so that the number of channels of the first feature map of each sample image is the first preset value, to obtain a feature map Q2 of each sample image.

The processing unit is further configured to: perform, on the feature map P2 of each sample image, upsampling processing and perform, on an upsampled feature map P2 and the feature map P1 of each sample image, superposition processing to obtain a second feature map of each sample image.

The processing unit is further configured to: perform, on the second feature map of each sample image, convolution processing so that the number of channels of the second feature map of each sample image is the first preset value, to obtain a feature map Q1 of each sample image.

The processing unit is further configured to: perform, on the feature map Q3 of each sample image, convolution processing to obtain a feature map Q4 of each sample image.

The processing unit is further configured to: perform, on the feature map Q4 of each sample image, convolution processing to obtain a feature map Q5 of each sample image.

The training unit is configured to train, according to the feature map Q1 of each sample image, the feature map Q2 of each sample image, the feature map Q3 of each sample image, the feature map Q4 of each sample image, the feature map Q5 of each sample image, and the defect detection result corresponding to each sample image, a neural network model to obtain a trained neural network model.

The detection unit is configured to input an internal pipeline image of a to-be-detected pipeline into the trained neural network model, and output a defect detection result corresponding to the to-be-detected pipeline, where the defect detection result includes a normal detection result and an abnormal detection result.

In a third aspect, the present application provides an electronic device. The electronic device includes a memory and at least one processor. The memory is coupled to the processor. The memory stores computer program code. The computer program code includes computer instructions. The computer instructions, when executed by the processor, enable the electronic device to perform the pipeline defect detection method based on the polymorphic rectangular feature extraction network according to any implementation of the first aspect.

In a fourth aspect, the present application provides a computer-readable storage medium. The computer-readable storage medium contains computer instructions. The computer instructions, when run on an electronic device, enable the electronic device to perform the pipeline defect detection method based on the polymorphic rectangular feature extraction network according to any implementation of the first aspect.

In a fifth aspect, the present application provides a computer program product. The computer program product, when run on a computer, enables the computer to perform the pipeline defect detection method based on the polymorphic rectangular feature extraction network according to any implementation of the first aspect.

### BRIEF DESCRIPTION OF THE DRAWINGS

FIG. 1 is a schematic diagram illustrating a hardware structure of an electronic device according to an embodiment of the present application.
FIG. 2 is a flowchart of a pipeline defect detection method based on a polymorphic rectangular feature extraction network according to an embodiment of the present application.
FIG. 3 is another flowchart of a pipeline defect detection method based on a polymorphic rectangular feature extraction network according to an embodiment of the present application.
FIG. 4 is a schematic diagram illustrating a process of determining a feature map I11 according to an embodiment of the present application.
FIG. 5 is a schematic diagram illustrating a process of determining a feature map I12 according to an embodiment of the present application.
FIG. 6 is a schematic diagram illustrating a process of determining a feature map C12 according to an embodiment of the present application.
FIG. 7 is a schematic diagram illustrating a hardware structure of a defect detection apparatus according to an embodiment of the present application.

### DETAILED DESCRIPTION

The technical solutions of embodiments of the present application will be described below in conjunction with the accompanying drawings of embodiments of the present application. In the description of the present application, unless otherwise specified, the symbol "/" represents an "or" relationship between the associated objects before and after the symbol; for example, A/B may represent A or B. The expression "and/or" used in the present application merely defines an association relationship between associated objects, representing three possible relationships. Taking A and/or B as an example, it may represent three scenarios: A alone, both A and B, or B alone, where A and B may be singular or plural nouns. In addition, in the description of the present application, the term "multiple" refers to two or more unless otherwise specified. The expression "at least one of the following" or similar phrases means any combination of the listed items, including any combination of a single item or multiple items. For example, "at least one of a, b and c" may represent a, b, c, a and b, a and c, b and c, or a, b and c, where a, b and c may each be a single item or multiple items.

Furthermore, for clearly describing the technical solutions of embodiments of the present application, terms such as "first" and "second" are adopted in embodiments of the present application to distinguish identical or similar items with substantially identical functions and effects. Those skilled in the art will appreciate that the terms such as "first" and "second" do not limit the quantity or execution order of relevant objects, nor do they mandate that the distinguished items must differ from each other.

Moreover, terms such as "exemplary" or "for example" in embodiments of the present application are used to represent examples, illustrations or explanations. Any embodiment or design solution described as "exemplary" or "for example" in embodiments of the present application shall not be construed as being preferred or advantageous over other embodiments or design solutions. Instead, the use of "exemplary", "for example" and similar terms aims to present relevant concepts in a specific manner for ease of understanding.

An oil and gas pipeline can transport large volumes of oil and gas resources efficiently and safely to ensure normal supply of such resources. However, with the continuous expansion of the oil and gas pipeline network, the pipeline safety problem has become increasingly prominent. When an oil and gas pipeline safety accident occurs, it often results in human casualties and property damage. Therefore, to improve the reliability and safety of pipeline operation, pre-commissioning detection is generally performed on the oil and gas pipeline before commissioning to identify defects existing in the oil and gas pipeline.

In the related art, before commissioning, pipeline detection is typically performed via a manipulator arm for identifying pipeline deformation defects, but it fails to detect crack defects inside the pipeline. To achieve effective detection of crack defects, a detector equipped with high-definition cameras is usually deployed to capture images of the interior of the pipeline. Machine learning algorithms are then adopted to analyze and process the captured internal pipeline images by means of square convolution or pooling operations, thereby evaluating internal pipeline conditions. However, such detection methods suffer from low detection accuracy; they cannot accurately identify the crack defects in near-rectangular regions inside the pipeline and thus fail to satisfy the users' usage requirements.

In view of this, embodiments of the present application provide a pipeline defect detection method based on a polymorphic rectangular feature extraction network. The method includes the following steps. A training sample set is acquired. The training sample set includes multiple sample images and a defect detection result corresponding to each sample image of the multiple sample images, and the multiple sample images are acquired by an image sensor inside a pipeline. The multiple sample images are input into a feature pyramid network, and a feature map C1, a feature map C2, and a feature map C3 of each sample image are output. The feature map C1, the feature map C2, and the feature map C3 of each sample image have different image sizes. Horizontal polymorphic rectangular pooling processing and vertical polymorphic rectangular pooling processing are performed on the feature map C1, the feature map C2, and the feature map C3 of each sample image to obtain a feature map C11 corresponding to the feature map C1, a feature map C21 corresponding to the feature map C2, and a feature map C31 corresponding to the feature map C3 of each sample image; and elongated convolution processing is performed on the feature map C1, the feature map C2, and the feature map C3 of each sample image to obtain a feature map C12 corresponding to the feature map C1, a feature map C22 corresponding to the feature map C2, and a feature map C32 corresponding to the feature map C3 of each sample image. The feature map C11, the feature map C21, and the feature map C31 of each sample image are each a feature map including long-distance context information, and the feature map C12, the feature map C22, and the feature map C32 of each sample image are each a feature map with enhanced long-range spatial dependency. Superposition processing is performed on the feature map C11 and the feature map C12 of each sample image to obtain a feature map P1 of each sample image; superposition processing is performed on the feature map C21 and the feature map C22 of each sample image to obtain a feature map P2 of each sample image; and superposition processing is performed on the feature map C31 and the feature map C32 of each sample image to obtain a feature map P3. Convolution processing is performed on the feature map P3 of each sample image so that the number of channels of the feature map P3 of each sample image is a first preset value, to further obtain a feature map Q3 of each sample image, and upsampling processing is performed on the feature map P3 of each sample image and then superposition processing is performed on an upsampled feature map P3 and the feature map P2 of each sample image, to obtain a first feature map of each sample image; convolution processing is performed on the first feature map of each sample image so that the number of channels of the first feature map of each sample image is the first preset value, to further obtain a feature map Q2 of each sample image, and upsampling processing is performed on the feature map P2 of each sample image, and then superposition processing is performed on an upsampled feature map P2 and the feature map P1 of each sample image, to obtain a second feature map of each sample image; convolution processing is performed on the second feature map of each sample image so that the number of channels of the second feature map of each sample image is the first preset value, to further obtain a feature map Q1 of each sample image; convolution processing is performed on the feature map Q3 of each sample image, to obtain a feature map Q4 of each sample image; and convolution processing is performed on the feature map Q4 of each sample image, to obtain a feature map Q5 of each sample image. A neural network model is trained according to the feature map Q1, the feature map Q2, the feature map Q3, the feature map Q4, the feature map Q5 of each sample image, and the defect detection result corresponding to each sample image, to obtain a trained neural network model. An internal pipeline image of a to-be-detected pipeline is input into the trained neural network model, and a defect detection result corresponding to the to-be-detected pipeline is output. The defect detection result includes a normal detection result and an abnormal detection result.

According to the method provided in embodiments of the present application, the horizontal polymorphic rectangular pooling processing, the vertical polymorphic rectangular pooling processing and the elongated convolution processing are performed on the sample images to obtain multiple feature maps with enhanced long-range dependency between pixels corresponding to the sample images. Each feature map of the multiple feature maps contains long-distance information and short-distance information. In this way, the neural network model trained based on the multiple feature maps of each sample image can accurately detect square-shaped defects and elongated narrow defects inside pipelines, thereby improving detection accuracy. In addition, the method provided in the present application can effectively reduce detection duration and improve detection efficiency.

In some embodiments, the method provided in embodiments of the present application may be executed by a pipeline defect detection apparatus 100 (hereinafter referred to as a defect detection apparatus 100) based on a polymorphic rectangular feature extraction network. As an example, the defect detection apparatus 100 may be any electronic device 200 with data processing capability, such as a general-purpose computer, a personal computer, a laptop computer, a switch, or a tablet computer. No limitation is imposed on the specific implementation of the defect detection apparatus 100 herein.

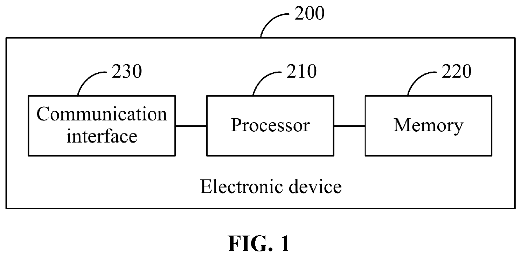

FIG. 1 is a schematic diagram illustrating a hardware structure of an electronic device according to an embodiment of the present application. The electronic device 200 includes a processor 210, a memory 220, and a communication interface 230.

The processor 210 may include at least one processing core. The processor 210 is connected to each component inside the electronic device 200 through various interfaces and circuits, and executes various functions of the electronic device 200 and processes data by running or executing instructions, programs, code sets, or instruction sets stored within the memory 220 and by invoking data stored in the memory 220. Optionally, the processor 210 may be implemented by at least one hardware form of a central processing unit (CPU), a graphics processing unit (GPU), digital signal processing (DSP), a field-programmable gate array (FPGA), and a programmable logic array (PLA).

The memory 220 may include random access memory (RAM) or read-only memory (ROM). Optionally, the memory 220 includes a non-transitory computer-readable storage medium. The memory 220 may be configured to store instructions, programs, codes, code sets, or instruction sets. The memory 220 may include a program storage region, and the program storage region may store instructions for implementing an operating system, instructions for implementing at least one function (such as an image acquisition function, an image processing function, and a model training function), and instructions for implementing each of the foregoing method embodiments, and the like.

The communication interface 230 is configured to communicate with other components, devices, or communication networks, such as a data storage component, an image processing device, Ethernet, a radio access network (RAN), and a wireless local area network (WLAN).

In terms of physical implementation, each of the foregoing components (such as the processor 210, the memory 220, and the communication interface 230) may be components integrated in the same device (such as the laptop computer). Alternatively, at least two of the components may be disposed in the same device as different components of one device, in a deployment manner similar to the deployment manner of devices or components in a distributed system.

It is to be understood that the structure illustrated in this embodiment does not constitute a specific limitation on the electronic device 200. In other embodiments of the present application, the electronic device 200 may include more or fewer components than those shown in the drawings, or may combine certain components, split certain components, or arrange components in different manners. The components shown in the drawings may be implemented by hardware, software, or a combination of software and hardware.

The pipeline defect detection method based on the polymorphic rectangular feature extraction network provided in embodiments of the present application will be described below in conjunction with the accompanying drawings of the Description.

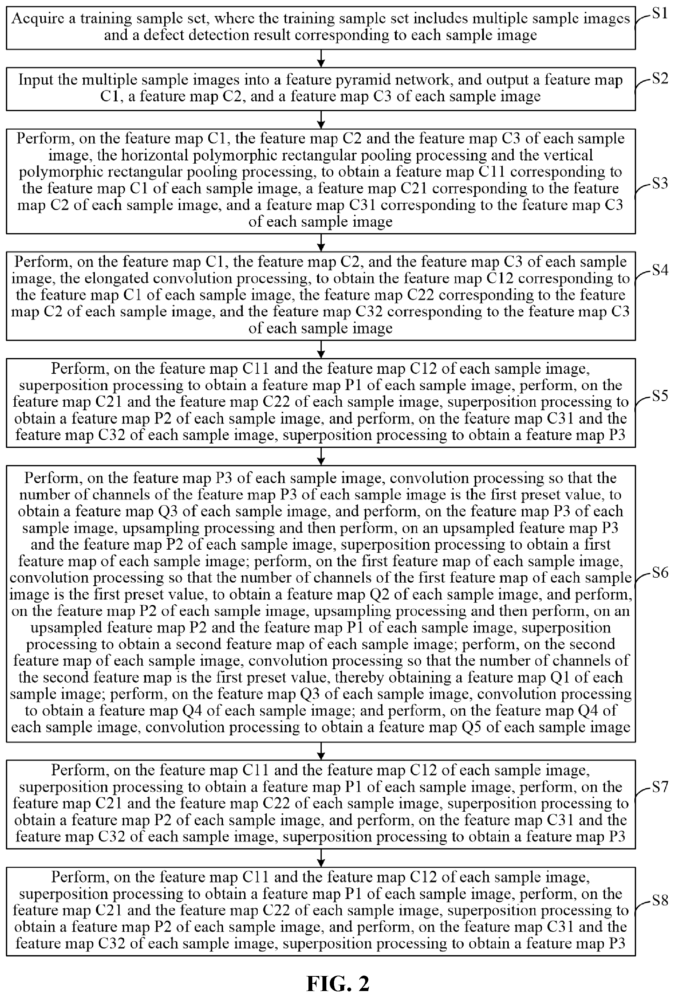

FIG. 2 is a flowchart of a pipeline defect detection method based on a polymorphic rectangular feature extraction network according to an embodiment of the present application. Optionally, the method may be executed by an electronic device 200 having the hardware structure shown in FIG. 1, that is, executed by the defect detection apparatus 100. The method may include steps S1 to S8.

In S1, a training sample set is acquired. The training sample set includes multiple sample images and a defect detection result corresponding to each sample image.

Exemplarily, the sample images are acquired by an image sensor inside a pipeline. The defect detection result corresponding to each sample image includes a normal detection result and an abnormal detection result. A sample image with an abnormal defect detection result corresponds to a pipeline interior having defects, and a sample image with a normal defect detection result corresponds to a pipeline interior free of defects.

In one possible implementation, before the above S1, the method provided in embodiments of the present application further includes the following steps: the multiple sample images and the defect detection result corresponding to each sample image are acquired; the multiple sample images are preprocessed to obtain multiple preprocessed sample images, where an image size of each of the multiple preprocessed sample images is a target image size; and the training sample set is generated according to the multiple preprocessed sample images and the defect detection result corresponding to each sample image.

The target image size is 640 × 640.

In some embodiments, before the multiple sample images are preprocessed, the method provided in embodiments of the present application further includes the following step: in a case where the number of the multiple sample images is less than a preset sample quantity, an image augmentation processing is performed on the multiple sample images, so that the number of sample images is greater than or equal to the preset sample quantity.

Exemplarily, the image augmentation processing includes performing operations such as rotation, scaling, cropping, and flipping on the sample image to increase the number of sample images.

Exemplarily, the number of sample images is 100, and the preset sample quantity is 200. The defect detection apparatus 100 is configured to perform operations such as rotation, scaling, cropping, and flipping on the 100 sample images to obtain 100 new sample images, and then generate the training sample set according to the 200 sample images. The image size of the 200 sample images is 640 × 640.

The method provided in embodiments of the present application performs augmentation processing on the sample images to effectively increase the number of sample images, thereby avoiding the overfitting problem of the neural network model caused by an insufficient number of sample images and effectively improving the accuracy of the neural network model in defect detection.

In S2, the multiple sample images are input into a feature pyramid network, and a feature map C1, a feature map C2, and a feature map C3 of each sample image are output.

The feature map C1, the feature map C2, and the feature map C3 of each sample image differ in image size.

The feature pyramid network (FPN) is a deep neural network used for object detection and semantic segmentation. Its core idea is to construct a feature pyramid by using cross-layer connections and top-level feature pyramids to preserve semantic information of high-level features and spatial information of low-level features. By constructing feature pyramids at different scales and extracting object features at different scales, the FPN improves the accuracy of detection and segmentation.

Specifically, the feature map C1, the feature map C2, and the feature map C3 of each sample image in the multiple sample images are obtained through the feature pyramid network. The feature map C1, the feature map C2, and the feature map C3 may include small-range context information of the sample image. The neural network model trained using the small-range context information can remain sensitive to pit defects and pinhole defects inside the pipeline.

In one example, the image sizes of the feature map C1, the feature map C2, and the feature map C3 are 80 × 80 × 512, 40 × 40 × 1024, and 20 × 20 × 2048, respectively. It may also be understood that the width and height of the feature map C1 are 80 and 80, respectively, and the number of channels is 512; the width and height of the feature map C2 are 40 and 40, respectively, and the number of channels is 1024; and the width and height of the feature map C3 are 20 and 20, respectively, and the number of channels is 2048.

In S3, the horizontal polymorphic rectangular pooling processing and the vertical polymorphic rectangular pooling processing are performed on the feature map C1, the feature map C2 and the feature map C3 of each sample image, to obtain a feature map C11 corresponding to the feature map C1, a feature map C21 corresponding to the feature map C2, and a feature map C31 corresponding to the feature map C3 of each sample image.

The feature map C11, the feature map C21, and the feature map C31 of each sample image are each a feature map including long-distance context information, and the feature map C12, the feature map C22, and the feature map C32 of each sample image are each a feature map with enhanced long-range spatial dependencies.

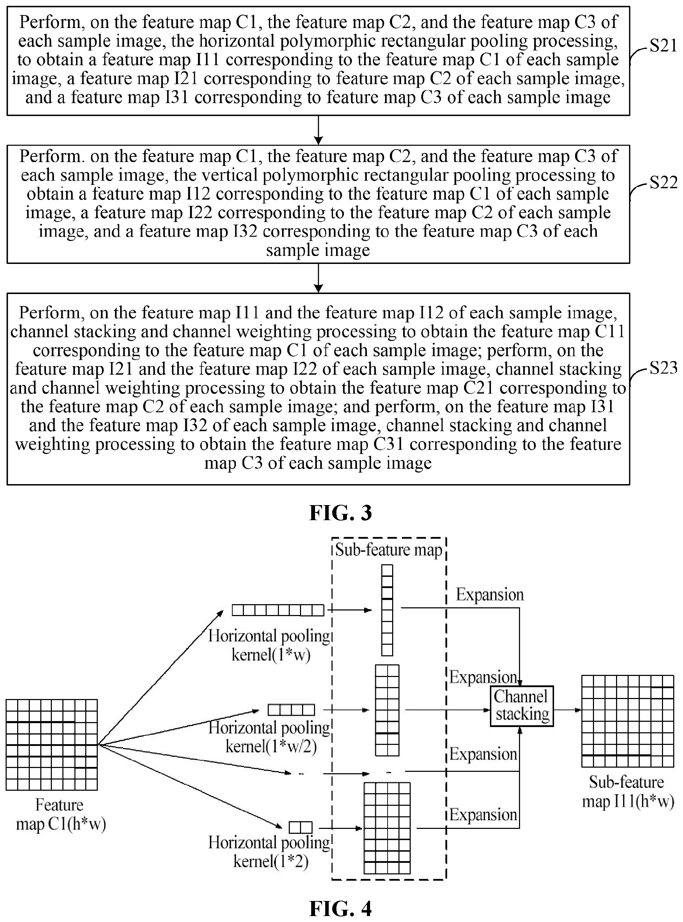

In some embodiments, referring to FIG. 3, the above S3 includes steps S21 to S23.

In S21, the horizontal polymorphic rectangular pooling processing is performed on the feature map C1, the feature map C2, and the feature map C3 of each sample image, to obtain a feature map I11 corresponding to the feature map C1, a feature map I21 corresponding to the feature map C2, and a feature map I31 corresponding to the feature map C3 of each sample image.

The feature map I11, the feature map I21, and the feature map I31 are each a feature map including horizontal pixel correlation information.

In one possible implementation, that the horizontal polymorphic rectangular pooling processing is performed on the feature map C1, the feature map C2, and the feature map C3 of each sample image to obtain the feature map I11 corresponding to the feature map C1, the feature map I21 corresponding to the feature map C2, and the feature map I31 corresponding to the feature map C3 of each sample image includes: pooling processing is performed on the feature map C1, the feature map C2, and the feature map C3 of each sample image by using multiple horizontal pooling kernels with different sizes, to obtain multiple sub-feature maps corresponding to the feature map C1, multiple sub-feature maps corresponding to the feature map C2, and multiple sub-feature maps corresponding to the feature map C3 of each sample image; the multiple sub-feature maps corresponding to the feature map C1 of each sample image are expanded to obtain multiple sub-feature maps having the same image size as the feature map C1, and channel stacking and channel restoration processing is performed on the multiple sub-feature maps of each sample image having the same image size as the feature map C1 to obtain the feature map I11 corresponding to the feature map C1 of each sample image; the multiple sub-feature maps corresponding to the feature map C2 of each sample image are expanded to obtain multiple sub-feature maps having the same image size as the feature map C2, and the channel stacking and channel restoration processing is performed on the multiple sub-feature maps of each sample image having the same image size as the feature map C2 to obtain the feature map I21 corresponding to the feature map C2 of each sample image; and the multiple sub-feature maps corresponding to the feature map C3 of each sample image are expanded to obtain multiple sub-feature maps having the same image size as the feature map C3, and the channel stacking and channel restoration processing is performed on the multiple sub-feature maps of each sample image having the same image size as the feature map C3 to obtain the feature map I31 corresponding to the feature map C3 of each sample image.

Exemplarily, the defect detection apparatus 100 performs horizontal polymorphic rectangular pooling processing on the feature map C1, the feature map C2, and the feature map C3 of each sample image through a horizontal polymorphic rectangular pooling module in a polymorphic rectangular pooling module. The horizontal polymorphic rectangular pooling module includes multiple horizontal pooling kernels of different sizes. The horizontal pooling kernels of different sizes are configured to collect information of different horizontal regions of the feature map C1, the feature map C2, and the feature map C3, that is, horizontal pixel correlation information of the feature map C1, the feature map C2, and the feature map C3. Referring to FIG. 4, in a case where the image size of the feature map C1 is h × w (h denotes the height of the feature map, and w denotes the width of the feature map), horizontal pooling kernels with sizes of 1 × w, 1 × └w/2┘, ..., 1 × 2 are respectively adopted to perform pooling processing on the feature map, to obtain multiple sub-feature maps with image sizes of h × 1, h × 2, ..., h × └w/2┘, respectively. Afterwards, a nearest neighbor upsampling method is adopted to expand the multiple sub-feature maps, so that the image size of the multiple sub-feature maps becomes h × w. Information of each horizontal region is integrated after channel concatenation, and a 1 × 1 convolution operation is finally performed to restore the number of channels to c (c represents the number of channels of the feature map C1), so that the obtained feature map I11 has the same image size as the feature map C1. It is to be noted that the process of obtaining the feature map I21 from the feature map C2 is identical to the process of obtaining I11 from the feature map C1, and the process of obtaining the feature map I31 from the feature map C3 is also identical to the process of obtaining I11 from the feature map C1, which will not be repeated herein.

The generation processes of the feature map I11, the feature map I21 and the feature map I31 may be expressed as follows: $\begin{matrix}{I}_{w} = expand \left({pool}_{1 \times w}\left(I\right)\right) © expand \left({pool}_{1 \times \left(w/2\right)}\left(I\right)\right) \\ © … © expand \left({pool}_{1 \times 2}\left(I\right)\right) ,\end{matrix}$ where *I_{W}* is any one of the feature map I11, the feature map I21, and the feature map I31.

In S22, the vertical polymorphic rectangular pooling processing is performed on the feature map C1, the feature map C2, and the feature map C3 of each sample image to obtain a feature map I12 corresponding to the feature map C1, a feature map I22 corresponding to the feature map C2, and a feature map I32 corresponding to the feature map C3 of each sample image.

The feature map I12, the feature map I22, and the feature map I32 are each a feature map including vertical pixel correlation information.

In one possible implementation, that the vertical polymorphic rectangular pooling processing is performed on the feature map C1, the feature map C2, and the feature map C3 of each sample image to obtain the feature map I12 corresponding to the feature map C1, the feature map I22 corresponding to the feature map C2, and the feature map I32 corresponding to the feature map C3 of each sample image includes: pooling processing is performed on the feature map C1, the feature map C2, and the feature map C3 of each sample image by using multiple vertical pooling kernels with different sizes to obtain multiple sub-feature maps corresponding to the feature map C1, multiple sub-feature maps corresponding to the feature map C2, and multiple sub-feature maps corresponding to the feature map C3 of each sample image; the multiple sub-feature maps corresponding to the feature map C1 of each sample image are expanded to obtain multiple sub-feature maps having the same image size as the feature map C1, and the channel stacking and channel restoration processing is performed on the multiple sub-feature maps of each sample image having the same image size as the feature map C1 to obtain the feature map I12 corresponding to the feature map C1 of each sample image; the multiple sub-feature maps corresponding to the feature map C2 of each sample image are expanded to obtain multiple sub-feature maps having the same image size as the feature map C2, and the channel stacking and channel restoration processing is performed on the multiple sub-feature maps of each sample image having the same image size as the feature map C2 to obtain the feature map I22 corresponding to the feature map C2 of each sample image; and the multiple sub-feature maps corresponding to the feature map C3 of each sample image are expanded to obtain multiple sub-feature maps having the same image size as the feature map C3, and channel stacking and channel restoration processing is performed on the multiple sub-feature maps of each sample image having the same image size as the feature map C3 to obtain the feature map I32 corresponding to the feature map C3 of each sample image.

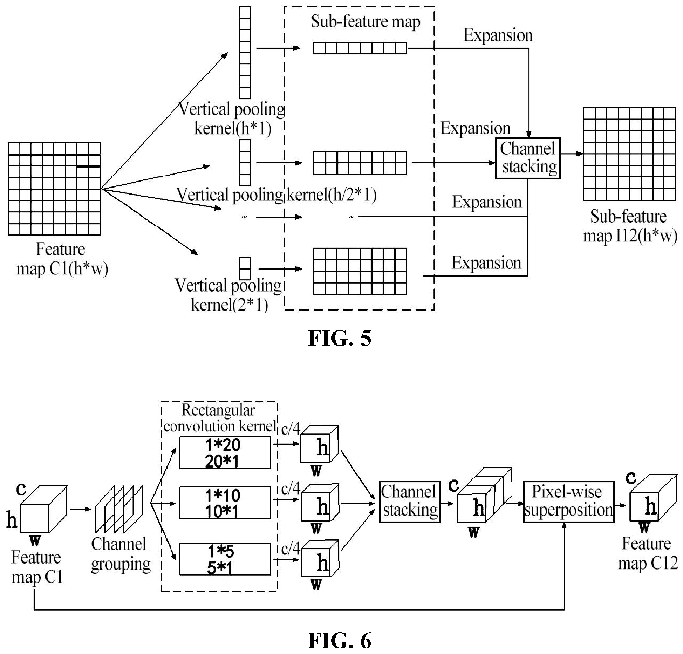

Exemplarily, referring to FIG. 5, the defect detection apparatus 100 is configured to perform vertical polymorphic rectangular pooling processing on the feature map C1, the feature map C2, and the feature map C3 of each sample image through a vertical polymorphic rectangular pooling module in the polymorphic rectangular pooling module. The vertical polymorphic rectangular pooling module includes multiple vertical pooling kernels of different sizes. The vertical pooling kernels of different sizes are configured to collect information of different vertical regions of the feature map C1, the feature map C2, and the feature map C3, that is, vertical pixel correlation information of the feature map C1, the feature map C2, and the feature map C3. In a case where the image size of the feature map C1 is h × w (h denotes the height of the feature map, and w denotes the width of the feature map), vertical pooling kernels with sizes of h × 1, └h/2┘ × 1, ..., 2 × 1 are respectively used for pooling processing to obtain multiple sub-feature maps with image sizes of 1 × w, 2 × w, ..., └h/2┘ × w, respectively. Afterwards, a nearest neighbor upsampling method is adopted to expand the multiple sub-feature maps, so that the image size of the multiple sub-feature maps is h × w. Information of each vertical region is integrated after channel concatenation, and a 1 × 1 convolution operation is finally performed to restore the number of channels to c₀ (c₀ represents the number of channels of the feature map C2), so that the obtained feature map I12 has the same image size as the feature map C1. It is to be noted that the process of obtaining the feature map I22 from the feature map C2 is identical to the process of obtaining I12 from the feature map C1, and the process of obtaining the feature map I32 from the feature map C3 is also identical to the process of obtaining I12 from the feature map C1, which will not be repeated herein.

The generation processes of the feature map I12, the feature map I22 and the feature map I32 may be expressed as follows: ${I}_{h} = expand \left({pool}_{h \times 1}\left(I\right)\right) © expand \left({pool}_{\left⌊h/2\right⌋ \times 1}\left(I\right)\right) © … © expand \left(\begin{matrix}{pool}_{2 \times 1} \\ \left(I\right)\end{matrix}\right) ,$ where *Iₕ* is any one of the feature map I12, the feature map I22, and the feature map I32.

In S23, channel stacking and channel weighting processing is performed on the feature map I11 and the feature map I12 of each sample image to obtain the feature map C11 corresponding to the feature map C1 of each sample image; channel stacking and channel weighting processing is performed on the feature map I21 and the feature map I22 of each sample image to obtain the feature map C21 corresponding to the feature map C2 of each sample image; and channel stacking and channel weighting processing is performed on the feature map I31 and the feature map I32 of each sample image to obtain the feature map C31 corresponding to the feature map C3 of each sample image.

Exemplarily, channel concatenation is performed on the feature map I11 and the feature map I12, and then the effective squeeze-and-excitation (eSE) attention mechanism is used to weight channels and reduce weights of redundant channels, to obtain the feature map C11 corresponding to the feature map C1. Channel concatenation is performed on the feature map I21 and the feature map I22, and then the eSE attention mechanism is used to weight channels and reduce weights of redundant channels, to obtain the feature map C21 corresponding to the feature map C2. Channel concatenation is performed on the feature map 131 and the feature map I32, and then the eSE attention mechanism is used to weight channels and reduce weights of redundant channels, to obtain the feature map C31 corresponding to the feature map C3.

The generation processes of the feature map C11, the feature map C21, and the feature map C31 may be as follows: ${I}_{PPM} = eSE \left({I}_{h}©{I}_{w}\right) ,$ where I_{PPM} is any one of the feature map C 11, the feature map C21 and the feature map C31.

It can be seen from the foregoing that, in the method provided in embodiments of the present application, the horizontal polymorphic rectangular pooling processing and the vertical polymorphic rectangular pooling processing are performed on the feature map C11, the feature map C21 and the feature map C31, so that long-distance correlation between pixels of the feature map C11, the feature map C21 and the feature map C31 is enhanced. A neural network model trained based on the feature map C11, the feature map C21, and the feature map C31 can identify crack defects accurately and rapidly.

In S4, the elongated convolution processing is performed on the feature map C1, the feature map C2, and the feature map C3 of each sample image, to obtain the feature map C12 corresponding to the feature map C1, the feature map C22 corresponding to the feature map C2, and the feature map C32 corresponding to the feature map C3 of each sample image.

In one possible implementation, the above S4 includes that: convolution processing is performed on the feature map C1, the feature map C2, and the feature map C3 of each sample image by using multiple rectangular convolution kernels of different sizes, to obtain the multiple sub-feature maps corresponding to the feature map C1, the multiple sub-feature maps corresponding to the feature map C2, and the multiple sub-feature maps corresponding to the feature map C3 of each sample image; and channel stacking and channel restoration processing is performed on the multiple sub-feature maps corresponding to the feature map C1 of each sample image to obtain the feature map C12 corresponding to the feature map C1 of each sample image; channel stacking and channel restoration processing is performed on the multiple sub-feature maps corresponding to the feature map C2 of each sample image to obtain the feature map C22 corresponding to the feature map C2 of each sample image; and channel stacking and channel restoration processing is performed on the multiple sub-feature maps corresponding to the feature map C3 of each sample image to obtain the feature map C32 corresponding to the feature map C3 of each sample image.

Exemplarily, referring to FIG. 6, when the image size of the feature map C1 is *h* × *w* × *c* ( h represents the height of the feature map, w represents the width of the feature map, and c represents the number of channels of the feature map), the defect detection apparatus 100 performs elongated convolution processing on the feature map C1 of each sample image through a remote compensation module. Firstly, the feature map C1 is grouped into 4 groups according to the number of channels of the feature map C1, with each group containing 64 channels. The grouped feature map C1 is subjected to convolution operations through rectangular convolution kernels. The multiple rectangular convolution kernels of different sizes include 3 branches. The rectangular convolution kernels of branch 1 are sized 1 × 5 and 5 × 1, the rectangular convolution kernels of branch 2 are sized 1 × 10 and 10 × 1, and the rectangular convolution kernels of branch 3 are sized 1 × 20 and 20 × 1. Subsequently, multiple sub-feature maps obtained by the multiple rectangular convolution kernels are summed, and then the multiple sub-feature maps are concatenated along the channel dimension to obtain a feature map C12 corresponding to the feature map C1 of each sample image with an image size of *h* × *w* × (c/4) × n. Afterwards, channel weighting is performed by adopting the eSE channel attention mechanism to increase the weights of effective channels. Finally, a 1 × 1 convolution operation is performed to obtain the feature map C12 corresponding to the feature map C1, and the image size of the feature map C12 is *h* × *w* × *c*. It is to be understood that the generation processes of the feature map C22 and the feature map C32 are the same as that of the feature map C12, which will not be repeated herein.

In S5, superposition processing is performed on the feature map C11 and the feature map C12 of each sample image to obtain a feature map P1 of each sample image, superposition processing is performed on the feature map C21 and the feature map C22 of each sample image to obtain a feature map P2 of each sample image, and superposition processing is performed on the feature map C31 and the feature map C32 of each sample image to obtain a feature map P3.

In S6, convolution processing is performed on the feature map P3 of each sample image so that the number of channels of the feature map P3 of each sample image is the first preset value, to obtain a feature map Q3 of each sample image, and upsampling processing is performed on the feature map P3 of each sample image and then superposition processing is performed on an upsampled feature map P3 and the feature map P2 of each sample image to obtain a first feature map of each sample image; convolution processing is performed on the first feature map of each sample image so that the number of channels of the first feature map of each sample image is the first preset value, to obtain a feature map Q2 of each sample image, and upsampling processing is performed on the feature map P2 of each sample image and then superposition processing is performed on the upsampled feature map P2 and the feature map P1 of each sample image to obtain a second feature map of each sample image; convolution processing is performed on the second feature map of each sample image so that the number of channels of the second feature map is the first preset value, thereby obtaining a feature map Q1 of each sample image; convolution processing is performed on the feature map Q3 of each sample image to obtain a feature map Q4 of each sample image; and convolution processing is performed on the feature map Q4 of each sample image to obtain a feature map Q5 of each sample image.

Exemplarily, a 3 × 3 convolution operation is performed on the feature map Q3 of each sample image to obtain a feature map Q4 corresponding to each sample image, where the feature map Q4 has an image size of 10×10 and a larger receptive field. Then, a 3 × 3 convolution operation is performed on the feature map Q4 of each sample image to obtain a feature map Q5 corresponding to each sample image, which has an image size of 5 × 5 and is more sensitive to large defects. Since the convolutions adopted in the ResNet network are conventional square convolutions, more local information can be acquired during initial feature extraction. After integrating the polymorphic rectangular pooling module and the remote compensation module, the long-range dependency between pixels can be improved. Therefore, the polymorphic rectangular feature extraction network can simultaneously capture both short-range and long-range information and achieve equal sensitivity to square-shaped defects (such as pinholes and pits) and long narrow defects (such as cracks).

In S7, a neural network model is trained to obtain a trained neural network model according to the feature map Q1, the feature map Q2, the feature map Q3, the feature map Q4, the feature map Q5 of each sample image, and the defect detection result corresponding to each sample image.

In some embodiments, the above S7 includes that: model training parameters are received. The model training parameters include the number of sample images, the number of training epochs, and a learning rate. The neural network model is trained based on the model training parameters by using a target loss function and according to the feature map Q1, the feature map Q2, the feature map Q3, the feature map Q4, the feature map Q5 of each sample image, and the defect detection result, to obtain the trained neural network model.

Exemplarily, classification and regression operations are performed respectively on the feature map Q1, the feature map Q2, the feature map Q3, the feature map Q4, and the feature map Q5, and the obtained results are compared with defect detection results corresponding to the respective feature map Q1, the feature map Q2, the feature map Q3, the feature map Q4, and the feature map Q5. Afterwards, the number of sample images is set to 8, the number of training epochs is set to 100, and the learning rate is set to 0.1. After 50 training epochs, the learning rate is set to 0.05. The weights of each layer of the model are updated by calculating loss function values, and the final trained model weights are saved, so as to obtain the trained neural network model.

In S8, an internal pipeline image of a to-be-detected pipeline is input into the trained neural network model, and a defect detection result corresponding to the to-be-detected pipeline is output, where the defect detection result includes a normal detection result and an abnormal detection result.

It can be seen from the above-described steps S1 to S8 that, according to the method provided in embodiments of the present application, horizontal polymorphic rectangular pooling processing, vertical polymorphic rectangular pooling processing, and elongated convolution processing are performed on the sample images to obtain multiple feature maps with enhanced long-range dependency between pixels corresponding to the sample images. Each feature map of the multiple feature maps contains both long-distance information and short-distance information. In this way, the neural network model trained based on the multiple feature maps of each sample image can accurately detect square-shaped defects and elongated narrow defects inside pipelines, thereby improving detection accuracy. Moreover, in the method provided in the present application, the detection time can be effectively reduced, and the detection efficiency can be improved.

The foregoing description mainly introduces the solutions of embodiments of the present application from the perspective of the method. It is to be understood that the defect detection apparatus 100 includes at least one of a hardware structure or a software module corresponding to each performed function to achieve the above functions. Those skilled in the art will readily appreciate that, in combination with the units and algorithm steps of each example described in the embodiments disclosed herein, embodiments of the present application may be implemented by hardware or a combination of hardware and computer software. Whether a certain function is executed by hardware or by computer software driving hardware depends on the specific application and design constraint conditions of the technical solution. Those skilled in the art may adopt different methods to implement the described functions for each specific application, and such implementations shall not be deemed to fall outside the scope of embodiments of the present application.

Embodiments of the present application may divide the defect detection apparatus 100 into functional units according to the above method examples. For example, each functional unit may be divided corresponding to each function of the defect detection apparatus 100, or two or more functions may be integrated into one processing unit. The integrated unit as described above may be implemented in the form of hardware or a software functional unit. It is to be noted that the division of units in embodiments of the present application is illustrative and merely a division of logical functions, and alternative division manners may be adopted in actual implementation.

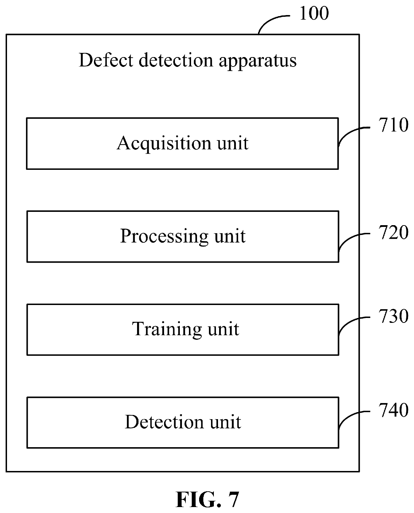

Exemplarily, FIG. 7 is a schematic diagram illustrating a hardware structure of a defect detection apparatus 100 according to an embodiment of the present application. The defect detection apparatus 100 includes an acquisition unit 710, a processing unit 720, a training unit 730 and a detection unit 740. The acquisition unit 710 is configured to acquire a training sample set. The training sample set includes multiple sample images and a defect detection result corresponding to each sample image of the multiple sample images, and the multiple sample images are acquired by an image sensor inside a pipeline. The processing unit 720 is configured to input the multiple sample images into a feature pyramid network and output a feature map C1, a feature map C2, and a feature map C3 of each sample image. The feature map C1, the feature map C2, and the feature map C3 of each sample image have different image sizes. The processing unit 720 is further configured to: perform, on the feature map C1, the feature map C2, and the feature map C3 of each sample image, horizontal polymorphic rectangular pooling processing and vertical polymorphic rectangular pooling processing to obtain a feature map C11 corresponding to the feature map C1, a feature map C21 corresponding to the feature map C2, and a feature map C31 corresponding to the feature map C3 of each sample image; and perform, on the feature map C1, the feature map C2, and the feature map C3 of each sample image, elongated convolution processing to obtain a feature map C12 corresponding to the feature map C1, a feature map C22 corresponding to the feature map C2, and a feature map C32 corresponding to the feature map C3 of each sample image. The feature map C11, the feature map C21, and the feature map C31 of each sample image are each a feature map including long-distance context information, and the feature map C12, the feature map C22, and the feature map C32 of each sample image are each a feature map with enhanced long-range spatial dependency. The processing unit 720 is further configured to: perform, on the feature map C11 and the feature map C12 of each sample image, superposition processing to obtain a feature map P1 of each sample image; perform, on the feature map C21 and the feature map C22 of each sample image, superposition processing to obtain a feature map P2 of each sample image; and perform, on the feature map C31 and the feature map C32 of each sample image, superposition processing to obtain a feature map P3. The processing unit 720 is further configured to: perform, on the feature map P3 of each sample image, convolution processing so that the number of channels of the feature map P3 of each sample image is a first preset value, to obtain a feature map Q3 of each sample image, and perform, on the feature map P3 of each sample image, upsampling processing and then perform, on an upsampled feature map P3 and the feature map P2 of each sample image, superposition processing to obtain a first feature map of each sample image; perform, on the first feature map of each sample image, convolution processing so that the number of channels of the first feature map of each sample image is the first preset value, to obtain a feature map Q2 of each sample image, and perform, on the feature map P2 of each sample image, upsampling processing and then perform, on an upsampled feature map P2 and the feature map P1 of each sample image, superposition processing to obtain a second feature map of each sample image; and perform, on the second feature map of each sample image, convolution processing so that the number of channels of the second feature map of each sample image is the first preset value, to obtain a feature map Q1 of each sample image; perform, on the feature map Q3 of each sample image, convolution processing to obtain a feature map Q4 of each sample image; and perform, on the feature map Q4 of each sample image, convolution processing to obtain a feature map Q5 of each sample image. The training unit 730 is configured to train, according to the feature map Q1, the feature map Q2, the feature map Q3, the feature map Q4, the feature map Q5 of each sample image, and the defect detection result corresponding to each sample image, a neural network model to obtain a trained neural network model. The detection unit 740 is configured to input an internal pipeline image of a to-be-detected pipeline into the trained neural network model, and output a defect detection result corresponding to the to-be-detected pipeline. The defect detection result includes a normal detection result and an abnormal detection result.

It is to be understood that specific descriptions of the above optional manners may refer to the foregoing method embodiments, which will not be repeated herein. In addition, the explanation of any of the above-described defect detection apparatuses 100 and the description of beneficial effects thereof may refer to the corresponding method embodiments described above, which will not be repeated herein.

Embodiments of the present application further provide a computer-readable storage medium. The computer-readable storage medium stores at least one computer instruction. The at least one computer instruction is loaded and executed by a processor to implement the methods according to the foregoing embodiments. Explanations of relevant contents and descriptions of beneficial effects regarding any of the computer-readable storage media provided above may refer to the corresponding embodiments above, which will not be repeated herein.

Embodiments of the present application further provide a chip. The chip integrates the control circuit for achieving the function of the foregoing defect detection apparatus 100 and at least one port. Optionally, the functions supported by the chip may be referenced to the above description, which will not be repeated herein.

It is to be understood by those of ordinary skill in the art that all or part of the steps for implementing the foregoing embodiments may be completed by instructing relevant hardware via a program, and such a program may be stored in the computer-readable storage medium. The above-described storage medium may be a read-only memory (ROM), a random access memory (RAM), or the like. The above-described processing unit or processor may be a central processing unit (CPU), a general-purpose processor, an application-specific integrated circuit (ASIC), a digital signal processor (DSP), a field programmable gate array (FPGA), or other programmable logic devices, transistor logic devices, hardware components, or any combination thereof.

Embodiments of the present application further provide a computer program product containing instructions. The instructions, when executed on a computer, cause the computer to perform any of the methods according to the foregoing embodiments. The computer program product includes one or more computer instructions. Upon loading and execution of the computer program instructions on the computer, all or part of the processes or functions according to embodiments of the present application are generated. The computer may be a general-purpose computer, a special-purpose computer, a computer network, or other programmable apparatus. The computer instructions may be stored in the computer-readable storage medium or transmitted from one computer-readable storage medium to another computer-readable storage medium. For example, the computer instructions may be transmitted from one website, computer, server, or data center to another website, computer, server, or data center in a wired manner (such as coaxial cable, optical fiber, digital subscriber line (DSL)) or a wireless manner (such as infrared, radio, and microwave). The computer-readable storage medium may be any available medium accessible by the computer, or a data storage device such as a server or data center integrating one or more available media. The available medium may include a magnetic medium (such as a floppy disk, a hard disk, a magnetic tape), an optical medium (such as a digital versatile disc (DVD)), or a semiconductor medium (such as a solid state drive (SSD)), and the like.

It is to be noted that the foregoing devices provided in embodiments of the present application for storing the computer instructions or computer programs, including but not limited to, the foregoing memory, computer-readable storage medium, communication chip, and the like, are all non-transitory. Those skilled in the art shall recognize that, in one or more of the foregoing examples, the functions described in embodiments of the present application may be implemented by hardware, software, firmware, or any combination thereof. Where implemented by software, such functions may be stored in the computer-readable storage medium or transmitted as one or more instructions or codes on the computer-readable storage medium. The computer-readable storage medium includes a computer storage medium and a communication medium. The communication medium includes any medium that facilitates transmission of a computer program from one position to another position. The storage medium may be any available medium accessible by a general-purpose or special-purpose computer.

Although embodiments of the present application have been illustrated and described above, it is to be understood that the foregoing embodiments are exemplary and shall not be construed as limitations on the present application. Those of ordinary skill in the art may make variations, modifications, substitutions and alterations to the above-described embodiments within the scope of the present application.

## Claims

1. A pipeline defect detection method based on a polymorphic rectangular feature extraction network, comprising:
acquiring a training sample set, wherein the training sample set comprises a plurality of sample images and a defect detection result corresponding to each sample image of the plurality of sample images, and the plurality of sample images are acquired by an image sensor inside a pipeline;
inputting the plurality of sample images into a feature pyramid network, and outputting a feature map (C1) of each sample image, a feature map (C2) of each sample image, and a feature map (C3) of each sample image, wherein the feature map (C1) of each sample image, the feature map (C2) of each sample image, and the feature map (C3) of each sample image have different image sizes;
performing, on the feature map (C1) of each sample image, the feature map (C2) of each sample image and the feature map (C3) of each sample image, horizontal polymorphic rectangular pooling processing and vertical polymorphic rectangular pooling processing to obtain a feature map (C11) corresponding to the feature map (C1) of each sample image, a feature map (C21) corresponding to the feature map (C2) of each sample image, and a feature map (C31) corresponding to the feature map (C3) of each sample image; wherein the feature map (C11) of each sample image, the feature map (C21) of each sample image, and the feature map (C31) of each sample image are each a feature map comprising long-distance context information;
performing, on the feature map (C1) of each sample image, the feature map (C2) of each sample image and the feature map (C3) of each sample image, elongated convolution processing to obtain a feature map (C12) corresponding to the feature map (C1) of each sample image, a feature map (C22) corresponding to the feature map (C2) of each sample image, and a feature map (C32) corresponding to the feature map (C3) of each sample image; wherein the feature map (C12) of each sample image, the feature map (C22) of each sample image, and the feature map (C32) of each sample image are each a feature map with enhanced long-range spatial dependency;
performing, on the feature map (C11) of each sample image and the feature map (C12) of each sample image, superposition processing to obtain a feature map (P1) of each sample image; performing, on the feature map (C21) of each sample image and the feature map (C22) of each sample image, superposition processing to obtain a feature map (P2) of each sample image; and performing, on the feature map (C31) of each sample image and the feature map (C32) of each sample image, superposition processing to obtain a feature map (P3);
performing, on the feature map (P3) of each sample image, convolution processing so that a number of channels of the feature map (P3) of each sample image is a first preset value, to obtain a feature map (Q3) of each sample image;
performing, on the feature map (P3) of each sample image, upsampling processing and performing, on an upsampled feature map (P3) and the feature map (P2) of each sample image, superposition processing to obtain a first feature map of each sample image;
performing, on the first feature map of each sample image, convolution processing so that a number of channels of the first feature map of each sample image is the first preset value, to obtain a feature map (Q2) of each sample image;
performing, on the feature map (P2) of each sample image, upsampling processing and performing, on an upsampled feature map (P2) and the feature map (P1) of each sample image, superposition processing to obtain a second feature map of each sample image;
performing, on the second feature map of each sample image, convolution processing so that a number of channels of the second feature map of each sample image is the first preset value, to obtain a feature map (Q1) of each sample image;
performing, on the feature map (Q3) of each sample image, convolution processing to obtain a feature map (Q4) of each sample image;
performing, on the feature map (Q4) of each sample image, convolution processing to obtain a feature map (Q5) of each sample image;
training, according to the feature map (Q1) of each sample image, the feature map (Q2) of each sample image, the feature map (Q3) of each sample image, the feature map (Q4) of each sample image, the feature map (Q5) of each sample image, and the defect detection result corresponding to each sample image, a neural network model to obtain a trained neural network model; and
inputting an internal pipeline image of a to-be-detected pipeline into the trained neural network model, and outputting a defect detection result corresponding to the to-be-detected pipeline, wherein the defect detection result comprises a normal detection result and an abnormal detection result.

2. The method of claim 1, wherein performing, on the feature map (C1) of each sample image, the feature map (C2) of each sample image, and the feature map (C3) of each sample image, the horizontal polymorphic rectangular pooling processing and the vertical polymorphic rectangular pooling processing to obtain the feature map (C11) corresponding to the feature map (C1) of each sample image, the feature map (C21) corresponding to the feature map (C2) of each sample image, and the feature map (C31) corresponding to the feature map (C3) of each sample image comprises:
performing, on the feature map (C1) of each sample image, the feature map (C2) of each sample image, and the feature map (C3) of each sample image, the horizontal polymorphic rectangular pooling processing to obtain a feature map (I11) corresponding to the feature map (C1) of each sample image, a feature map (I21) corresponding to the feature map (C2) of each sample image, and a feature map (I31) corresponding to the feature map (C3) of each sample image, wherein the feature map (I11), the feature map (I21), and the feature map (I31) are each a feature map comprising horizontal pixel correlation information;
performing, on the feature map (C1) of each sample image, the feature map (C2) of each sample image, and the feature map (C3) of each sample image, the vertical polymorphic rectangular pooling processing to obtain a feature map (I12) corresponding to the feature map (C1) of each sample image, a feature map (I22) corresponding to the feature map (C2) of each sample image, and a feature map (I32) corresponding to the feature map (C3) of each sample image, wherein the feature map (I12), the feature map (I22), and the feature map (I32) are each a feature map comprising vertical pixel correlation information; and
performing, on the feature map (I11) of each sample image and the feature map (I12) of each sample image, channel stacking and channel weighting processing to obtain the feature map (C11) corresponding to the feature map (C1) of each sample image; performing, on the feature map (I21) of each sample image and the feature map (I22) of each sample image, the channel stacking and channel weighting processing to obtain the feature map (C21) corresponding to the feature map (C2) of each sample image; and performing, on the feature map (I31) of each sample image and the feature map (I32) of each sample image, the channel stacking and channel weighting processing to obtain the feature map (C31) corresponding to the feature map (C3) of each sample image.

3. The method of claim 2, wherein performing, on the feature map (C1) of each sample image, the feature map (C2) of each sample image, and the feature map (C3) of each sample image, the horizontal polymorphic rectangular pooling processing to obtain the feature map (I11) corresponding to the feature map (C1) of each sample image, the feature map (I21) corresponding to the feature map (C2) of each sample image, and the feature map (I31) corresponding to the feature map (C3) of each sample image comprises:
performing, on the feature map (C1) of each sample image, the feature map (C2) of each sample image, and the feature map (C3) of each sample image, pooling processing by using a plurality of horizontal pooling kernels with different sizes, to obtain a plurality of sub-feature maps corresponding to the feature map (C1) of each sample image, a plurality of sub-feature maps corresponding to the feature map (C2) of each sample image, and a plurality of sub-feature maps corresponding to the feature map (C3) of each sample image;
expanding the plurality of sub-feature maps corresponding to the feature map (C1) of each sample image to obtain a plurality of sub-feature maps having a same image size as the feature map (C1), and performing, on the plurality of sub-feature maps of each sample image having the same image size as the feature map (C1), channel stacking and channel restoration processing to obtain the feature map (I11) corresponding to the feature map (C1) of each sample image;
expanding the plurality of sub-feature maps corresponding to the feature map (C2) of each sample image to obtain a plurality of sub-feature maps having a same image size as the feature map (C2), and performing, on the plurality of sub-feature maps of each sample image having the same image size as the feature map (C2), the channel stacking and channel restoration processing to obtain the feature map (I21) corresponding to the feature map (C2) of each sample image; and
expanding the plurality of sub-feature maps corresponding to the feature map (C3) of each sample image to obtain a plurality of sub-feature maps having a same image size as the feature map (C3), and performing, on the plurality of sub-feature maps of each sample image having the same image size as the feature map (C3), the channel stacking and channel restoration processing to obtain the feature map (I31) corresponding to the feature map (C3) of each sample image.

4. The method of claim 3, wherein performing, on the feature map (C1) of each sample image, the feature map (C2) of each sample image, and the feature map (C3) of each sample image, the vertical polymorphic rectangular pooling processing to obtain the feature map (I12) corresponding to the feature map (C1) of each sample image, the feature map (I22) corresponding to the feature map (C2) of each sample image, and the feature map (I32) corresponding to the feature map (C3) of each sample image comprises:
performing, on the feature map (C1) of each sample image, the feature map (C2) of each sample image, and the feature map (C3) of each sample image, pooling processing by using a plurality of vertical pooling kernels with different sizes, to obtain a plurality of sub-feature maps corresponding to the feature map (C1) of each sample image, a plurality of sub-feature maps corresponding to the feature map (C2) of each sample image, and a plurality of sub-feature maps corresponding to the feature map (C3) of each sample image;
expanding the plurality of sub-feature maps corresponding to the feature map (C1) of each sample image to obtain a plurality of sub-feature maps having a same image size as the feature map (C1), and performing, on the plurality of sub-feature maps of each sample image having the same image size as the feature map (C1), the channel stacking and channel restoration processing to obtain the feature map (I12) corresponding to the feature map (C1) of each sample image;
expanding the plurality of sub-feature maps corresponding to the feature map (C2) of each sample image to obtain a plurality of sub-feature maps having a same image size as the feature map (C2), and performing, on the plurality of sub-feature maps of each sample image having the same image size as the feature map (C2), the channel stacking and channel restoration processing to obtain the feature map (I22) corresponding to the feature map (C2) of each sample image; and
expanding the plurality of sub-feature maps corresponding to the feature map (C3) of each sample image to obtain a plurality of sub-feature maps having a same image size as the feature map (C3), and performing, on the plurality of sub-feature maps of each sample image having the same image size as the feature map (C3), the channel stacking and channel restoration processing to obtain the feature map (I32) corresponding to the feature map (C3) of each sample image.

5. The method of claim 4, wherein performing, on the feature map (C1) of each sample image, the feature map (C2) of each sample image and the feature map (C3) of each sample image, the elongated convolution processing to obtain the feature map (C12) corresponding to the feature map (C1) of each sample image, the feature map (C22) corresponding to the feature map (C2) of each sample image, and the feature map (C32) corresponding to the feature map (C3) of each sample image comprises:
performing, on the feature map (C1) of each sample image, the feature map (C2) of each sample image, and the feature map (C3) of each sample image, convolution processing by using a plurality of rectangular convolution kernels of different sizes, to obtain the plurality of sub-feature maps corresponding to the feature map (C1) of each sample image, the plurality of sub-feature maps corresponding to the feature map (C2) of each sample image, and the plurality of sub-feature maps corresponding to the feature map (C3) of each sample image;
performing, on the plurality of sub-feature maps corresponding to the feature map (C1) of each sample image, the channel stacking and channel restoration processing to obtain the feature map (C12) corresponding to the feature map (C1) of each sample image;
performing, on the plurality of sub-feature maps corresponding to the feature map (C2) of each sample image, the channel stacking and channel restoration processing to obtain the feature map (C22) corresponding to the feature map (C2) of each sample image; and
performing, on the plurality of sub-feature maps corresponding to the feature map (C3) of each sample image, the channel stacking and channel restoration processing to obtain the feature map (C32) corresponding to the feature map (C3) of each sample image.

6. The method of claim 5, wherein training, according to the feature map (Q1) of each sample image, the feature map (Q2) of each sample image, the feature map (Q3) of each sample image, the feature map (Q4) of each sample image, the feature map (Q5) of each sample image, and the defect detection result corresponding to each sample image, the neural network model to obtain the trained neural network model comprises:
receiving model training parameters, wherein the model training parameters comprise a number of sample images, a number of training epochs, and a learning rate; and
training, based on the model training parameters and through a target loss function, the neural network model according to the feature map (Q1) of each sample image, the feature map (Q2) of each sample image, the feature map (Q3) of each sample image, the feature map (Q4) of each sample image, the feature map (Q5) of each sample image, and the defect detection result, to obtain the trained neural network model.

7. The method of claim 6, wherein before acquiring the training sample set, the method further comprises:
acquiring the plurality of sample images and the defect detection result corresponding to each sample image;
performing, on the plurality of sample images, preprocessing to obtain a plurality of preprocessed sample images, wherein an image size of each preprocessed sample image of the plurality of preprocessed sample images is a target image size; and
generating, according to the plurality of preprocessed sample images and the defect detection result corresponding to each sample image, the training sample set.

8. The method of claim 7, wherein before performing, on the plurality of sample images, the preprocessing, the method further comprises:
in response to a number of the plurality of sample images being less than a preset sample quantity, performing, on the plurality of sample images, image augmentation processing to enable the number of the plurality of sample images to be greater than or equal to the preset sample quantity.

9. A pipeline defect detection apparatus based on a polymorphic rectangular feature extraction network, comprising:
an acquisition unit, which is configured to acquire a training sample set, wherein the training sample set comprises a plurality of sample images and a defect detection result corresponding to each sample image, and the plurality of sample images are acquired by an image sensor inside a pipeline;
a processing unit, which is configured to input the plurality of sample images into a feature pyramid network and output a feature map (C1) of each sample image, a feature map (C2) of each sample image, and a feature map (C3) of each sample image, wherein the feature map (C1) of each sample image, the feature map (C2) of each sample image, and the feature map (C3) of each sample image have different image sizes;
the processing unit is further configured to: perform, on the feature map (C1) of each sample image, the feature map (C2) of each sample image and the feature map (C3) of each sample image, horizontal polymorphic rectangular pooling processing and vertical polymorphic rectangular pooling processing to obtain a feature map (C11) corresponding to the feature map (C1) of each sample image, a feature map (C21) corresponding to the feature map (C2) of each sample image, and a feature map (C31) corresponding to the feature map (C3) of each sample image; wherein the feature map (C11) of each sample image, the feature map (C21) of each sample image, and the feature map (C31) of each sample image are each a feature map comprising long-distance context information;
the processing unit is further configured to: perform, on the feature map (C1) of each sample image, the feature map (C2) of each sample image, and the feature map (C3) of each sample image, elongated convolution processing to obtain a feature map (C12) corresponding to the feature map (C1) of each sample image, a feature map (C22) corresponding to the feature map (C2) of each sample image, and a feature map (C32) corresponding to the feature map (C3) of each sample image; wherein the feature map (C12) of each sample image, the feature map (C22) of each sample image, and the feature map (C32) of each sample image are each a feature map with enhanced long-range spatial dependency;
the processing unit is further configured to: perform, on the feature map (C11) of each sample image and the feature map (C12) of each sample image, superposition processing to obtain a feature map (P1) of each sample image; perform, on the feature map (C21) of each sample image and the feature map (C22) of each sample image, superposition processing to obtain a feature map (P2) of each sample image; and perform, on the feature map (C31) of each sample image and the feature map (C32) of each sample image, superposition processing to obtain a feature map (P3);
the processing unit is further configured to: perform, on the feature map (P3) of each sample image, convolution processing so that a number of channels of the feature map (P3) of each sample image is a first preset value, to obtain a feature map (Q3) of each sample image;
the processing unit is further configured to: perform, on the feature map (P3) of each sample image, upsampling processing and perform, on an upsampled feature map (P3) and the feature map (P2) of each sample image, superposition processing to obtain a first feature map of each sample image;
the processing unit is further configured to: perform, on the first feature map of each sample image, convolution processing so that a number of channels of the first feature map of each sample image is the first preset value, to obtain a feature map (Q2) of each sample image;
the processing unit is further configured to: perform, on the feature map (P2) of each sample image, upsampling processing and perform, on an upsampled feature map (P2) and the feature map (P1) of each sample image, superposition processing to obtain a second feature map of each sample image;
the processing unit is further configured to: perform, on the second feature map of each sample image, convolution processing so that a number of channels of the second feature map of each sample image is the first preset value, to obtain a feature map (Q1) of each sample image;
the processing unit is further configured to: perform, on the feature map (Q3) of each sample image, convolution processing to obtain a feature map (Q4) of each sample image;
the processing unit is further configured to: perform, on the feature map (Q4) of each sample image, convolution processing to obtain a feature map (Q5) of each sample image;
a training unit, which is configured to train, according to the feature map (Q1) of each sample image, the feature map (Q2) of each sample image, the feature map (Q3) of each sample image, the feature map (Q4) of each sample image, the feature map (Q5) of each sample image, and the defect detection result corresponding to each sample image, a neural network model to obtain a trained neural network model; and
a detection unit, which is configured to input an internal pipeline image of a to-be-detected pipeline into the trained neural network model, and output a defect detection result corresponding to the to-be-detected pipeline, wherein the defect detection result comprises a normal detection result and an abnormal detection result.

10. An electronic device, comprising:
a processor; and
a memory configured to store instructions executable by the processor;
wherein the processor is configured to execute the instructions to implement the pipeline defect detection method based on a polymorphic rectangular feature extraction network of any one of claims 1 to 8.
